# EUROPÄISCHE PATENTANMELDUNG

(11) **EP 1 072 560 A1**
(43) Veröffentlichungstag der Anmeldung: **31.01.2001**
(21) Anmeldenummer: 00114396.5
(22) Anmeldetag: 05.07.2000
(51) Int. Cl.: C02F 3/20

(54) **Vorrichtung zum feinblasigen Belüften von Wasser**

(30) Priorität: 24.07.1999 DE 19934890
(71) Anmelder: Jäger, Arnold, D-31303 Burgdorf (DE)
(72) Erfinder: Jäger, Arnold, D-31303 Burgdorf (DE)
(74) Vertreter: Depmeyer, Lothar

(57) **Zusammenfassung**

Die Erfindung betrifft eine Vorrichtung zum feinblasigen Belüften von Wasser unter Verwendung von Elastomerkörpern mit feinen Durchbrüchen. Um diese Vorrichtungen zugänglich machen zu können, ohne dazu den Wasserspiegel des zu belüftenden Beckens od. dgl. absenken zu müssen, ist die Vorrichtung mit einem oder mehreren Auftriebskörpern (8) versehen in der Weise, dass die gewöhnlich am Grund des Beckens od. dgl. befindliche Vorrichtung durch Einleiten von Luft in die Auftriebskörper so weit anhebbar ist, dass die Vorrichtung oberhalb der Wasseroberfläche zugänglich ist.

## Beschreibung

Die Erfindung betrifft eine Vorrichtung zum feinblasigen Belüften von Wasser mit durch eine oder mehrere, der Zufuhr von Druckluft dienenden, starren Zuleitungen gespeisten Belüftungselementen, die platten- bzw. tellerartige und/oder schlauchförmige, feinperforierte bzw. feingeschlitzte Elastomerkörper aufweisen.

Diese meist am Grund der zu belüftenden Becken befestigten Vorrichtungen unterliegen nicht nur dem Verschleiss, sondern auch der Verschmutzung und anderen die Funktionstüchtigkeit der Vorrichtung beeinträchtigenden Einflüssen. Demgemäss müssen die Becken entleert werden, um die Vorrichtungen zugänglich zu machen. Es versteht sich, dass die dazu erforderlichen Massnahmen zeitraubend und betriebsstörend sind.

Aufgrund der Erfindung sollen diese Nachteile behoben werden. Manipulationen an den Vorrichtungen sollen demgemäss wesentlich erleichtert werden; sie sollen aufgrund der Erfindung ermöglicht werden, ohne das Becken od. dgl. entleeren zu müssen.

Zur Lösung dieser Aufgabe sind erfindungsgemäss die Vorrichtung und/oder die starren Zuleitungen mit einem oder mehreren behälterartigen Auftriebskörpern versehen, die in der Wirkstellung der Vorrichtung ganz oder teilweise geflutet und mit einem oder mehreren Anschlüssen zum Einleiten vorgespannter Luft versehen sind in der Weise, dass durch Einleiten von Luft die Vorrichtung so weit anhebbar ist, dass die Vorrichtung, zumindest jedoch die Belüftungselemente oberhalb der Wasseroberfläche zugänglich sind.

Demgemäss liegt der Erfindung der Gedanke zugrunde, von einer starren Verankerung der Belüftungselemente auf dem Beckenboden od. dgl. abzusehen und die Vorrichtung anhebbar auszubilden unter Verwendung von Auftriebskörpern, die nach Belieben mit vorgespannter Luft gefüllt werden können, um ihre Wasserfüllung auszudrücken. In Verfolg des Erfindungsgedankens können nunmehr die eingangs erwähnten Vorrichtungen auch in Seen oder Teichen genutzt werden, da sie an beliebiger Stelle abgesenkt und wieder zum Aufschwimmen gebracht werden können.

Vorzugsweise werden dabei die Belüftungselemente und vorzugsweise auch ihre Zuleitungen oben auf den Auftriebskörpern gelagert, um sicherzustellen, dass bei aufschwimmenden Auftriebskörpern die Belüftungselemente oberhalb der Wasseroberfläche angeordnet sind. Zweckmässigerweise sollen die Auftriebskörper auch so ausgebildet sein, dass sie einen kippsicheren Schwimmkörper bilden können. Hierzu ist es auch vorteilhaft, wenn die Auftriebskörper einen Rahmen bilden oder auf einem starren Rahmen gelagert werden, auf dem die Zuleitungen und die Belüftungselemente zu installieren sind. Eine besonders vorteilhafte Anordnung ist dann gegeben, wenn die Auftriebskörper Rohre sind, die dann gleichzeitig die Festigkeit des Rahmens sicherstellen können.

Zweckmässigerweise werden in Kammern unterteilte Auftriebskörper benutzt, die je mit Be- und Entlüftungsanschlüssen zu versehen sind. Dabei ist es vorteilhaft, bei langgestreckten Auftriebskörpern Entluftungsöffnungen an den Enden der Auftriebskörper vorzusehen, um Verkantungen und Kippbewegungen der Auftriebskörper beim Eintauchen auszuschliessen.

Weitere Einzelheiten der Erfindung werden anhand der Zeichnung erläutert, in der Ausführungsbeispiele der Erfindung dargestellt sind. Es zeigen :
Fig. 1 eine Vorrichtung zum feinblasigen Belüften von Wasser zusammen mit Auftriebskörpern in der Draufsicht,
Fig. 2 einen Schnitt nach der Linie II - II von Fig. 1,
Fig. 3 einen senkrechten Teilschnitt durch den Rand eines zu belüftenden Wasserbeckens und
Fig. 4 eine Teildraufsicht auf einen gegenüber Fig. 1 abgewandelten Auftriebskörper.

Die eigentliche Belüftungsvorrichtung besteht im wesentlichen aus einer starren Zuleitung in Form eines Rohres 1, an dem mehrere, einander parallele Tragrohre 2 an der Unterseite des Rohres 1 befestigt sind. Diese Tragrohre 2 verlaufen beidseitig quer zum Rohr 1 und sind mit einem eng anliegenden rohrförmigen Bezug 3 versehen, der aus einem Elastomer bzw. Gummi besteht und mit einer Vielzahl feiner Schlitze - bei 4 angedeutet - versehen ist. Dieser Bezug 3 ist durch Schellen od. dgl. gegen Versatz auf dem Tragrohr 2 gesichert.

Die vorgespannte Luft wird im Sinne des Pfeiles 5 dem Rohr 1 zugeführt. Sie gelangt von dort im Sinne der Pfeile 6 in die Tragrohre 2 und schliesslich unter die Bezüge 3. Dort bewirkt sie eine Öffnung der feinen Schlitze und tritt in Form von feinen Bläschen im Sinne der Pfeile 7 in das Wasser W ein. Wird der Bezug 3 nicht mehr von innen beaufschlagt, so schliessen sich die feinen Schlitze.

Die Luftzufuhr zu den Bezügen 3 kann beliebig sein. Es versteht sich ferner, dass die Tragrohre 2 durch bekannte Massnahmen innen mit Wasser gefüllt sein könnnen, um die Auftriebskräfte der Belüftungsvorrichtung zu verringern.

Diese Belüftungsvorrichtung ist mit einem oder mehreren Auftriebskörpern verbunden.

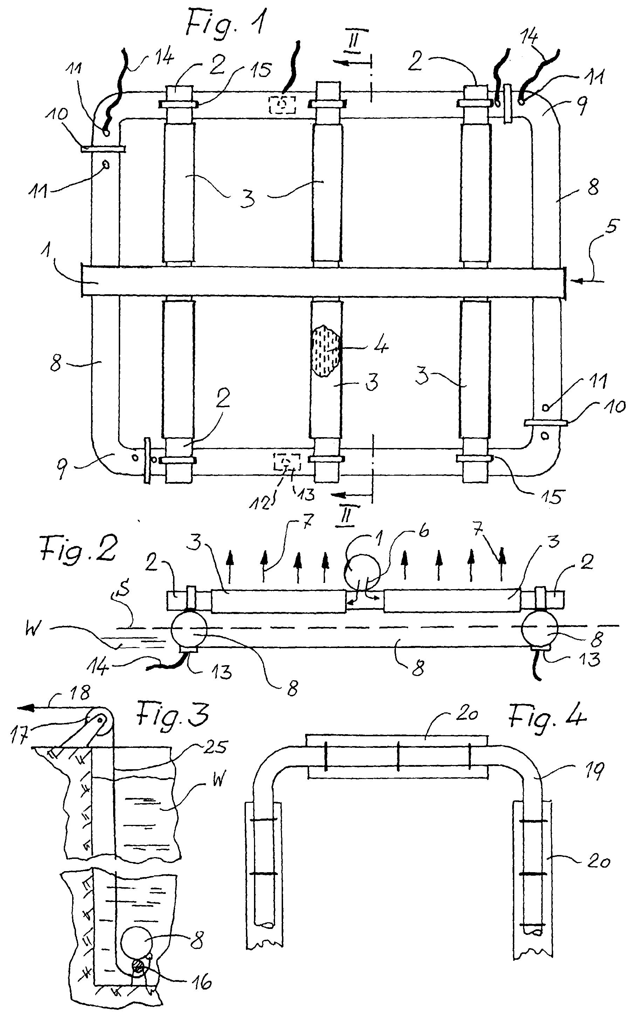

Beim Ausführungsbeispiel gemäss Fig. 1 und 2 ist ein starrer Rahmen vorgesehen, der aus vier Elementen, und zwar vier Rohrabschnitten 8 mit Krümmern 9 besteht. Diese Elemente sind durch Flansche 10 fest miteinander verbunden, um so den gewünschten starren Rahmen zu bilden. Zugleich werden vier Kammern bzw. Zellen gebildet. Um diese mit vorgespannter Luft beschicken bzw. diese entlüften bzw. fluten zu können, weist jedes Element im Bereich seiner Enden an der Oberseite je einen Anschluss 11 und ferner noch einen Anschluss 12 über einen Anschlusskasten 13 auf. Diesen Anschlüssen werden biegsame Leitungen 14 zugeordnet, über die die Luft zugeführt bzw. abgeführt werden kann. Es versteht sich, dass die Auftriebskörper über die Leitungen 14 in geeigneter Weise steuerbar sind. Wichtig ist dabei jedoch, dass sich Entlüftungsmöglichkeiten in Form der Anschlüsse 11 an den Enden der Elemente 8, 9 befinden, damit eine gleichmässige Entlüftung erreichbar ist und Kipp- oder Kantbewegungen der Auftriebskörper durch verbleibende Luftpolster im Endbereich der Elemente ausgeschlossen sind.

Aus Fig. 1 und 2 ist erkennbar, dass die Enden der Tragrohre 2 auf dem Auftriebskörper bzw. den Rohhrabschnitten 8 aufliegen. Dort sind sie durch Schellen 15 gesichert. Das Rohr 1 ist seinerseits oben auf den Tragrohren 2 befestigt.

Bei gefluteten Auftriebskörpern kann in bekannter Weise die Wasserbelüftung vollzogen werden. Sind jedoch Inspektionen, Reparaturen, Austauscharbeiten od. dgl. an der Belüftungsvorrichtung erforderlich, so wird in die Auftriebskörper vorgespannte Luft eingeleitet. In der Endstelllung ( Schwimmstellung ), die gemäss Fig. 2 durch den Wasserspiegel S aufgezeigt ist, befinden sich alle Teile der Belüftungseinrichtung oberhalb des Wasserspiegels S. Damit können alle gewünschten Arbeiten ausgeführt werden, ohne dazu den Wasserspiegel S absenken oder gar das Wasserbecken entleeren zu müssen.

Um die Belüftungsvorichtung in ihre Wirkstellung bringen zu können, werden die Auftriebskörper entlüftet. In der Wirkstellung können dann die Auftriebskörper gesichert werden, und zwar z.B. durch ein Halteseil 25, das am Grunde des Beckens durch eine Öse 16 und oben durch eine Rolle 17 umgelenkt ist. Durch Zugeinwirkung im Sinne des Pfeiles 18 kann die Belüftungsvorrichtung am Beckengrund fixiert werden. Es versteht sich, dass ein Auftauchen der Belüftungsvorrichtung durch das Halteseil 25 nicht behindert wird, wenn es nachgeben kann.

Aus Stabilitätsgründen sollte die Belüftungsvorrichtung auf einem Auftriebskörper bzw. einem diesen tragenden Gestell od. dgl. angeordnet sein, das über eine ausreichende Festigkeit insb. Steifigkeit verfügt. Demgemäss kann z.B. gemäss Fig. 4 ein starrer Tragkörper als Rahmen 19 benutzt werden, dem mehrere Auftriebskörper 20 zugeordnet werden müssten. Diese können als aus Gummi od. dgl. bestehende Blähkörper ausgeführt sein.

Es sei erwähnt, dass bei der Ausführung gemäss Fig. 1 und 2 ggfs. Beschwerungsgewichte erforderlich sind, um einen ausreichenden Untertrieb zu erreichen, wenn die Vorrichtung absinken soll. Dabei sollen die Beschwerungsgewichte so gross sein, dass im Schwimmzustand ein noch gerade erforderlicher Auftrieb vorgesehen ist. Dieser wird dann durch Fluten aufgehoben. Bei der Ausführung gemäss Fig. 4 hingegen muss bei nicht aufgeblähten Blähkörpern 20 die Vorrichtung schwerer als das Wasservolumen sein bzw. auf dem Boden des Beckens aufliegen. Der Auftrieb wird dann durch Einleiten von Luft in die Blähkörper erreicht.

Es hat sich ferner als vorteilhaft erwiesen, die Anschlüsse 11 jeder Kammer der Auftriebskörper zu einer Leitung zusammenzuführen, um so eine gemeinsame Be- bzw. Entlüftungsleitung zu erreichen.

## Patentansprüche

1. Vorrichtung zum feinblasigen Belüften von Wasser mit einem oder mehreren durch vorzugsweise starre Zuleitungen gespeisten Belüftungselementen, die platten- bzw. tellerartige und/oder schlauchförmige, feinperforierte bzw. feingeschlitzte Elastomerkörper aufweisen, dadurch gekennzeichnet, dass die Belüftungsvorrichtung (2,3) und/oder ihre Zuleitungen (1) mit einem oder mehreren behälterartigen Auftriebskörpern (8,9,20) versehen sind, die in der Wirkstellung der Belüftungsvorrichtung ganz oder teilweise geflutet und mit einem oder mehreren Anschlüssen (11,12) zum Einleiten von Luft in der Weise versehen sind, dass durch Einleiten von Luft die Belüftungsvorrichtung so weit anhebbar ist, dass die Belüftungsvorrichtung, zumindest jedoch deren Belüftungselemente (3) oberhalb der Wasseroberfläche (S) zugänglich sind.

2. Vorrichtung nach Anspruch 1, dadurch gekennzeichnet, dass die Auftriebskörper (8,9) und/oder die von ihnen unterstützten Tragkörper (19) zum Unterfangen der Belüftungsvorrichtung (2,3) steif ausgebildete Elemente sind.

3. Vorrichtung nach Anspruch 1 und 2, dadurch gekennzeichnet, dass die Elemente einen geschlossenen Rahmen bilden.

4. Vorrichtung nach Anspruch 2 und 3, dadurch gekennzeichnet, dass die Elemente in zwei oder mehrere Kammern oder Zellen unterteilt sind, von denen jede mit Anschlüssen (11) zum Zuleiten und Abführen einer Luftfüllung versehen sind.

5. Vorrichtung nach einem oder mehreren vorhergehenden Ansprüchen, dadurch gekennzeichnet, dass die eigentlichen Belüfftungselemente (3) auf Tragrohren (2) angeordnet sind, deren Enden sich auf den Elementen (8,9,20) abstützen.

6. Vorrichtung nach Anspruch 5, dadurch gekennzeichnet, dass sich oberhalb der Tragrohre (2) vorzugsweise mittig eine vorzugsweise starre Zuleitung (1) für die Belüftungselemente (3) befindet, die im rechten Winkel zu den Tragrohren (2) angeordnet ist.

7. Vorrichtung nach einem oder mehreren vorhergehenden Ansprüchen, dadurch gekennzeichnet, dass die Auftriebskörper (20) Blähkörper aus Gummi od. dgl. sind.

8. Vorichtung nach Anspruch 1, dadurch gekennzeichnet, dass die Auftriebskörper (8,9,20) an gegenüberliegenden Enden mit Durchbrüchen bzw. Entlüftungsöffnungen (11) versehen sind.

9. Vorrichtung nach Anspruch 1, dadurch gekennzeichnet, dass den Auftriebskörpern (8,9) lösbare Verankerungsmittel (25,16) für die Wirkstellung der Belüftungsvorrichtung zugeordnet sind.

10. Vorrichtung nach Anspruch 9, dadurch gekennzeichnet, dass die Auftriebskörper ((8,9) von einem Seil od. dgl. gehalten sind, das durch eine vorzugsweise am Grund des Wasserbehälters verankerte Öse (16) hindurchgeführt und an seinem oberen Ende (oberhalb der Wasseroberfläche S) lösbar gehalten ist.

11. Vorrichtung nach den Ansprüchen 1 - 4, dadurch gekenzeichnet, dass die Rahmen aus vier geraden Rohrabschnitten (8) mit an einem Ende angeordntem Krümmer (9) zusammengesetzt sind.

12. Vorrichtung nach Anspruch 1, dadurch gekennzeichnet, dass die Auftriebskörper (8,9) zur Aufnahme von Beschwerungselementen ausgebildet sind.

13. Vorrichtung nach Anspruch 4, dadurch gekennzeichnet, dass die Anschlüsse (11) jeder Kammer zu einer (gemeinsamen) Be- bzw. Entlüftungsleitung geführt sind.
